# EUROPEAN PATENT SPECIFICATION

(11) **EP 4 732 084 B1**
(45) Date of publication and mention of the grant of the patent: **09.09.2026**
(21) Application number: 25740730.4
(22) Date of filing: 09.07.2025
(51) Int. Cl.: G05D 1/229, G05D 1/689, B64U 10/13

(54) **METHOD FOR IMAGING A VEHICLE**
VERFAHREN ZUR ABBILDUNG EINES FAHRZEUGS
PROCEDE POUR LA PRISE D'IMAGES D'UN VEHICULE

(30) Priority: 19.07.2024 GB 202410560
(43) Date of publication of application: 29.04.2026
(60) Divisional application: 26194459.9 / 4 803 423
(73) Proprietor: Ebbon Intelligence Limited, Oxfordshire OX13 6FD (GB)
(72) Inventor: LARKIN, Steve, Wootton, Oxfordshire OX13 6FD (GB); GIBBIN, Craig, Wootton, Oxfordshire OX13 6FD (GB); PILKINGTON, Robert, Wootton, Oxfordshire OX13 6FD (GB); ISLES, Charles, Wootton, Oxfordshire OX13 6FD (GB)
(74) Representative: J A Kemp LLP
(86) International application number: PCT/EP2025/069605
(87) International publication number: WO 2026/017511

(56) References cited:
- GB-A- 2 552 092
- US-A1- 2016 173 740
- US-A1- 2023 064 115

## Description

The present invention relates to systems for automated imaging of vehicles using unmanned aerial vehicles.

Improving the quality of marketing photographs and videos of vehicles has been proven to have a positive impact on their online marketing presence and saleability, especially in highly developed automotive markets. Studies in the UK and Germany provide significant statistical evidence supporting this claim.

Young used vehicles (in general 6 months to 5 years old) and stocked new vehicles (i.e. specific, individual physical units) are commonly marketed by the world's major franchised retailers, vehicle supermarkets, and internet-based sellers. In all these cases, any physical vehicle usually begins its marketing journey via listings on the internet through the leading sites within its home market.

In all these cases every physical vehicle is increasingly expected to have a high-quality set of exterior and interior pictures, ideally a 30-120 second video and clear "headline" descriptions of that specific vehicle's key features. To compile these at high quality for every individual vehicle is not a trivial process.

Filming vehicles for marketing listings is usually the responsibility of salespeople at a vehicle retailer. However, due to labour shortages, varying skill levels, and the primary focus on dealing with customers, this important marketing task is often inconsistent, delayed, and challenging to perform on a large scale.

In addition, other businesses or organisations that own vehicles, for example consumer or corporate vehicle rental businesses, need to be able to consistently and regularly record the condition of their vehicles for the purpose of damage recording and appraisal. It is very valuable to such business to have comprehensive and consistent images of a vehicle at certain points in the vehicle's life, capturing high-definition photography of its bodywork, glass, tyres, wheels, and interior. However, as for the marketing imaging, the capturing of these images is time-consuming and often inconsistent, such that accurate recording of changes in the condition of vehicles is difficult and unreliable. US 2016/0173740 A1 discloses systems and methods for automatic vehicle imaging, which may use cameras configured to capture images and/or video.
GB 2552092A discloses a system for visual inspection of a motor vehicle.
US 2023/064115 A1 discloses a system for determining work vehicle operational state using an unmanned aerial vehicle (UAV) configured to fly relative to a work vehicle and an imaging device supported on the UAV.

It is therefore desirable to provide improved methods for imaging vehicles.

According to the claimed invention, there is provided a method of imaging a vehicle using an unmanned aerial vehicle, UAV, according to claim 1.

This method streamlines the filming, imaging, and editing process for each vehicle, making it more efficient and standardised. The detection of characteristics of the vehicle allows the movement of the UAV to be controlled around a specific vehicle automatically. Using this method, the work involved in imaging and filming vehicles can be assigned to non-expert operators at more suitable stages in the processing of vehicles. For example, a person preparing (cleaning etc.) a vehicle can carry out imaging immediately after the vehicle is prepared for sale. The method also ensures a far more consistent, high-quality, and comprehensive imaging process through the use of the imaging plan, which can be implemented consistently at all types of retailer locations.

The predetermined imaging plan is defined in an abstract co-ordinate system, such that the predetermined imaging plan is generic to one or more classes of vehicle, optionally wherein the one or more classes of vehicle comprise differing sizes and shapes. Each imaging action may comprise an abstract waypoint defined in an abstract co-ordinate system, and the flight waypoint corresponding to each imaging action may be calculated by transforming the abstract waypoint into a flight co-ordinate system based on the detected characteristic. The calculation of specific flight waypoints based on the detection of characteristics of the vehicle allows the imaging plan to be adapted to specific vehicles automatically, without needing an individual imaging plan to be designed for each size, shape, or type of vehicle.

Optionally, the abstract waypoint is defined relative to one or more anchor points, the anchor points corresponding to positions on the vehicle and/or positions of target features of the vehicle. This allows the imaging plan to be defined in terms of important features of the vehicle that may be of particular interest for prospective buyers or for condition tracking, such as wheels or body panels.

Optionally, detecting the characteristic of the vehicle comprises: taking a first measurement of the vehicle using the one or more sensors; taking a second measurement of the vehicle using the one or more sensors; and determining the characteristic based on the first measurement and the second measurement.

Optionally, the first measurement is taken with the UAV at a first position, optionally wherein the first position is an initial position of the UAV; and the second measurement is taken with the UAV at a second position having a known displacement relative to the first position. The one or more sensors may comprise a camera; and taking the first and second measurements may comprise capturing respective first and second images of the vehicle. This can allow characteristics such as the size of the vehicle or the position of a component of the vehicle to be determined by geometric comparison of the position of features in the two images.

Optionally, the one or more sensors comprise a camera and a ranging sensor; taking the first measurement comprises capturing a first image of the vehicle using the camera; and taking the second measurement comprises determining a distance from the UAV to the vehicle using the ranging sensor. This enables the position to be determined without having to move the UAV between the taking of the two measurements.

Also disclosed herein is a method of imaging a vehicle using an unmanned aerial vehicle, UAV, according to a predetermined imaging plan, wherein: the UAV comprises one or more sensors; and the imaging plan comprises one or more imaging actions. The method comprises: detecting positions of target features of the vehicle using the one or more sensors; and carrying out the imaging actions based on the detected positions.

This method streamlines the filming, imaging, and editing process for each vehicle, making it more efficient and standardised. The detection of target features of the vehicle allows the movement of the UAV to be controlled to ensure that the filming captures specific points of interest around a vehicle such as body panels, headlights, etc. that may be important to inspect for value assessment and condition tracking. Using this method, the work involved in imaging and filming vehicles can be assigned to non-expert operators at more suitable stages in the processing of vehicles. The method also ensures a far more consistent, high-quality, and comprehensive imaging process through the use of the imaging plan, which can be implemented consistently at all types of retailer locations.

Optionally, the method further comprises carrying out the imaging actions by controlling the UAV to move between each of the calculated flight waypoints. Controlling the UAV to move between each of the calculated flight waypoints may comprise calculating a path between the flight waypoints. The imaging actions may specify one or both of: a) a shape of the path between the flight waypoints corresponding to the imaging action, optionally wherein the path is a curved path; and b) a speed of movement of the UAV along the path between flight waypoints corresponding to the imaging action. This allows for stylistic choices in the capturing of video images, and for defining profiles of movement to ensure that all relevant details of the vehicle are captured during the imaging.

There is further provided a system for imaging a vehicle comprising: an unmanned aerial vehicle, UAV, comprising one or more sensors; and a processing unit configured to carry out the method of the invention using the UAV. There is further provided a computer program comprising, or a computer-readable medium having stored thereon, instructions to cause the system to carry out the method of the invention.

Embodiments of the invention will now be described, by way of example only, with reference to the accompanying drawings in which corresponding reference symbols represent corresponding parts, and in which
Fig. 1 shows a system for carrying out the method of imaging a vehicle;
Fig. 2 is a flowchart of the method of imaging a vehicle;
Fig. 3 shows an abstract flight plan;
Fig. 4 illustrates the use of two measurements to detect a characteristic of the vehicle;
Fig. 5 shows a typical view of a vehicle taken by a UAV;
Fig. 6 is a schematic of a first example vehicle to be imaged using the method;
Fig. 7 shows the abstract flight plan of Fig. 3 adapted to real-world flight waypoints for the vehicle of Fig. 6;
Fig. 8 is a schematic of a second example vehicle to be imaged using the method;
Fig. 9 shows the abstract flight plan of Fig. 3 adapted to real-world flight waypoints for the vehicle of Fig. 8; and
Fig. 10 shows an example software and hardware configuration of the system 1.

The present disclosure provides an adaptive, robotised system and methodology for imaging a vehicle to create videos and comprehensive image sets of vehicles. The method and system disclosed herein allow for autonomous imaging (including video recording and detailed photography) of the vehicle with extreme consistency for sales/marketing, condition monitoring, and other related purposes.

The method can be applied to vehicles of different shapes and sizes. Any type of vehicle may be imaged, but the system is particularly suitable for use in the imaging of road vehicles such as cars, vans, trucks, or motorcycles. However, potentially any large vehicular asset may be imaged. The method does not rely on a database of vehicle dimensions or related data but adapts predefined imaging plans to a specific detected vehicle for photographing, videoing or condition scanning.

The imaging process is made materially more consistent and efficient for businesses processing large numbers of vehicles. This is achieved because the method enables a small team in any retailer to define the best ways to "film and describe" vehicles and then to automate this across multiple locations using imaging plans in a convenient to implement, extremely consistent and portable manner. This also enables continuous improvement of video and imaging standards through "over the air" template uploads. Changes of purpose, such as from marketing imaging to damage recording and appraisal, only require changing of one or a small number of software components.

By conducting the imaging at critical stages of the vehicle's life cycle and securely storing the high-definition imagery, (e.g. in a cloud-based repository), several additional benefits can be obtained beyond those for sales and marketing. These benefits include but are not limited to; documenting a vehicle's condition before and after servicing to provide evidence of any damages incurred during the service, inspecting any vehicle prior to transportation or delivery to a customer, documenting a vehicle's condition between rentals, leases, or hires, and providing detailed imagery for damage analysis and cost estimation from remote appraisal teams and/or appropriate software-based estimating solutions.

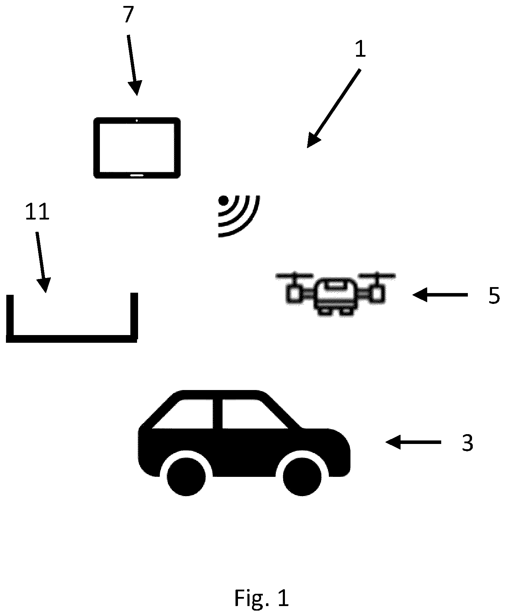

Fig. 1 shows a system 1 for carrying out the method of imaging a vehicle 3. The method uses an unmanned aerial vehicle (UAV) 5. UAVs are commonly referred to as drones, and the terms UAV and drone may be used interchangeably herein. The method delivers consistent, high-quality images without relying on a human videographer or UAV pilot. The system comprises the UAV 5 and other hardware and software components including a processing unit 7 configured to carry out the method using the UAV 5. The processing unit 7 may run a computer program comprising instructions that, when executed by the processing unit 7, cause the system 1 to carry out the method.

The processing unit 7 may comprise any suitable computing device, such as a tablet computer, laptop, sufficiently capable smartphone, or similar device. The processing unit 7 may comprise a portable computing device. The processing unit 7 may alternatively be provided by an edge computing implementation. so that only the UAV 5 itself and a cloud management system is required in a deployment.

The processing unit 7 is configured to carry out the method using the UAV 5 by controlling the UAV 5, such that the UAV 5 flies autonomously under the control of the processing unit 7. The processing unit 7 may initiate the method in response to receipt of an indication (for example from a human operator or other input) that the vehicle 3 is ready for imaging and/or that the UAV 5 has been deployed to an appropriate position in the vicinity of the vehicle 3.

The processing unit 7 may communicate with the UAV 5 via a wireless or over-the-air link. Any suitable communication link may be used, such as Wi-Fi, Bluetooth, radio, etc. The system 1 may be designed to work locally via direct communication between the UAV 5 and the processing unit 7, for example within the range of a communication unit within the UAV 5 such as a Wi-Fi router.

Alternatively, communication between the UAV 5 and processing unit 7 may be indirect, for example where both the UAV 5 and processing unit 7 are connected to a local wireless network supported by networking components separate from both the UAV 5 and processing unit 7. However, this implementation may not be preferred in some situations because it may increase the latency of communication between the UAV 5 and the processing unit 7.

In particular, the control of the UAV 5 by the processing unit 7 is preferably entirely local, such that processing required to control the UAV 5 and carry out the method is performed entirely by the UAV 5 and/or the processing unit 7. This means the system 1 can operate and carry out the method without requiring any connection to a remote server, thereby improving performance in areas where remote internet connections may be poor.

The UAV 5 comprises one or more sensors. The one or more sensors may comprise a camera, a radar sensor, an ultrasonic sensor, an infra-red time of flight sensor, or a lidar sensor. However, the method does not rely on the use of global positioning system (GPS) signals or other satellite-based geolocation signals, and such signals may not be used by the method. The UAV 5 may not comprise a GPS receiver or other geolocation system receiver. If the UAV 5 does comprise such a receiver, the receiver may be disabled or signals from the receiver may be disregarded or ignored by the processing unit 7.

The UAV 5 may be battery powered. The UAV 5 may be a mini-UAV. For example, the UAV 5 may weigh less than 250 grams. The automated imaging method can be carried out indoors or outdoors, even in areas with limited space. The UAV 5 may be configured to operate indoors. This allows the UAV 5 to be deployed locally where vehicles are being filmed or scanned, e.g. at vehicle retail sites, compounds, or preparation centres. In general, the UAV 5 will be operating in an area just large enough to film the vehicle 3 and may capture images at any height from ground level (e.g. capturing vehicle wheel shots) up to a threshold height above a roof height of the vehicle 3 (which may be automatically detected by the system 1). The UAV 5 may further be configured to operate within the vehicle 3 without causing damage to the vehicle interior. For example, the UAV 5 may be of the protected blade type, such as having enclosed propeller blades.

The system 1 may further comprise a docking station 11 for the UAV 5. The docking station 11 may comprise power and/or networking connections to allow the UAV 5 to be recharged and to transfer imaging data from the UAV 5, in that case that not all imaging data is not transferred wirelessly during operation of the UAV 5.

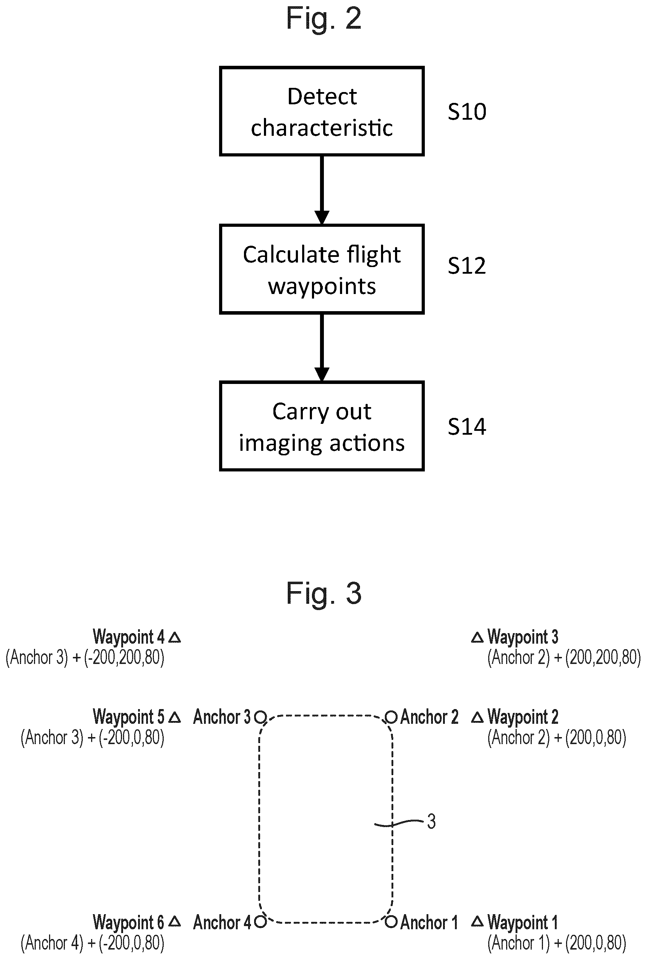

Fig. 2 shows a flowchart of the method of imaging the vehicle 3. The method is carried out according to a predetermined imaging plan. The use of a predetermined imaging plan allows the method to utilise templated plans that can be defined as "best practice" by marketing/filming experts and distributed (for example via the internet) to deployments of the physical system 1 wherever they are located.

The predetermined imaging plan provides an abstract flight plan for controlling the movement of the UAV 5 around the vehicle 3. The abstract flight plan describes a consistent path around the vehicle 3 in a generalised manner such that the path can still be applied when the dimensions of that object will change significantly between different deployment situations for different individual vehicles.

The predetermined imaging plan is defined in an abstract co-ordinate system, such that the predetermined imaging plan is generic to one or more classes of vehicle. The one or more classes of vehicle may comprise vehicles of differing sizes and shapes. The one or more classes of vehicle may comprise different classes of road vehicle such as cars, vans, trucks, or motorcycles.

The imaging plan comprises one or more imaging actions. The imaging actions comprise instructions for the control of the UAV 5 by the processing unit 7. In particular, the imaging actions comprise a combination of instructions for controlling movement of the UAV 5 and for controlling the capturing of images of the vehicle 3.

Each imaging action may comprise an abstract waypoint defined in the abstract co-ordinate system. This defines a position to which the UAV 5 should be moved during the imaging process. An imaging action may comprise only a single abstract waypoint, for example if a still image is to be taken. Alternatively, an imaging action may comprise a plurality of abstract waypoints, for example if a video is to be taken during movement of the UAV 5 between two or more abstract waypoints.

The abstract waypoint may be defined relative to one or more anchor points. An anchor point is a known point on the vehicle 3, the real-world position of which will be identified by the system at runtime. The anchor points correspond to positions on the vehicle 3 and/or positions of target features of the vehicle 3. The vehicle 3 will have anchors at different points around its body. For example, anchor points may correspond to positions of specific components such as the tyres of the vehicle 3, or may correspond to other positions on the vehicle 3. If the vehicle 3 were a car; then example anchor points might be the corners of the vehicle 3. Thereby, the anchor points also contribute to defining the abstract co-ordinate system.

Fig. 3 shows an example of the abstract waypoints of an imaging plan. As can be seen, a plurality of anchor points is present corresponding to the corners of the vehicle 3. The plurality of abstract waypoints is defined relative to the anchors.

Each of the abstract waypoints in this example have their positions defined in three-dimensional co-ordinates in terms of distances relative to one of the anchor points. However, the abstract waypoints may also be defined relative to the anchor points in other ways. An abstract waypoint may be defined as being at a predetermined position relative to two or more anchor points. For example, an abstract waypoint may be set to be halfway along a line drawn between two anchor points.

In order to image the vehicle 3 according to the predetermined imaging plan, the system 1 carries out a localisation process which transforms the abstract flight plan of the predetermined imaging plan into an actionable, concrete, flight plan for the UAV 5. The system localisation process may include the following functions:
1. Determining a characteristic of the vehicle, such as its size.
2. Establishing a flight co-ordinate system.
3. Positioning the anchor points of the abstract flight plan within the flight co-ordinate system based on the characteristic of the vehicle.
4. Calculating the co-ordinates in the flight co-ordinate system of each abstract waypoint specified in the abstract flight plan using the locations of the anchor points the flight co-ordinate system.

The system is then able to pilot the UAV 5 between each waypoint of the predetermined imaging plan to carry out the imaging actions. The UAV 5 may then return to its initial position. The method of Fig. 2 achieves this process as will be described in more detail below.

The method comprises a step S10 of detecting a characteristic of the vehicle 3 using the one or more sensors of the UAV 5.

The characteristic of the vehicle 3 can be any characteristic that may affect the flight of the UAV 5 around the vehicle 3, or on which an imaging action may be based. The characteristic may comprise a physical property of the vehicle 3. In particular, the characteristic may comprise a spatial measurement of a property of the vehicle 3, for example a dimension of the vehicle 3 (such as its width, length, or height), or a position of a feature of the vehicle 3 (such as a position of a corner of the vehicle). The step S10 may comprise detecting plural characteristics of the vehicle.

In particular, the characteristic may comprise a position of a target feature, or a plurality of target features, of the vehicle 3, such that detecting the characteristic of the vehicle 3 comprises detecting a position of a target feature of the vehicle using the one or more sensors. The target feature may be any feature of the vehicle 3. The target feature may comprise a component of the vehicle 3, for example one or more of tyres, wheels, headlights, rear lights, wing mirrors, door handles, specific body panels, and windows. The position of the target feature may be a position relative to the UAV 5.

The one or more sensors may comprise a camera. In this case, detecting the position of the target feature of the vehicle 3 may comprise detecting the target feature in an image captured by the camera using automated object detection or computer vision techniques.

The characteristic may be determined based on a combination of a dimension and a position of one or more target features. For example, the characteristic may be a distance between two target features, such as a wheelbase determined by detecting the distance between tyres of the vehicle 3.

Where the characteristic comprises a distance or dimension, plural measurements may be required to determine the distance or dimension. In such cases, detecting the characteristic of the vehicle 3 may comprise taking a first measurement of the vehicle using the one or more sensors, taking a second measurement of the vehicle using the one or more sensors, and determining the characteristic based on the first measurement and the second measurement.

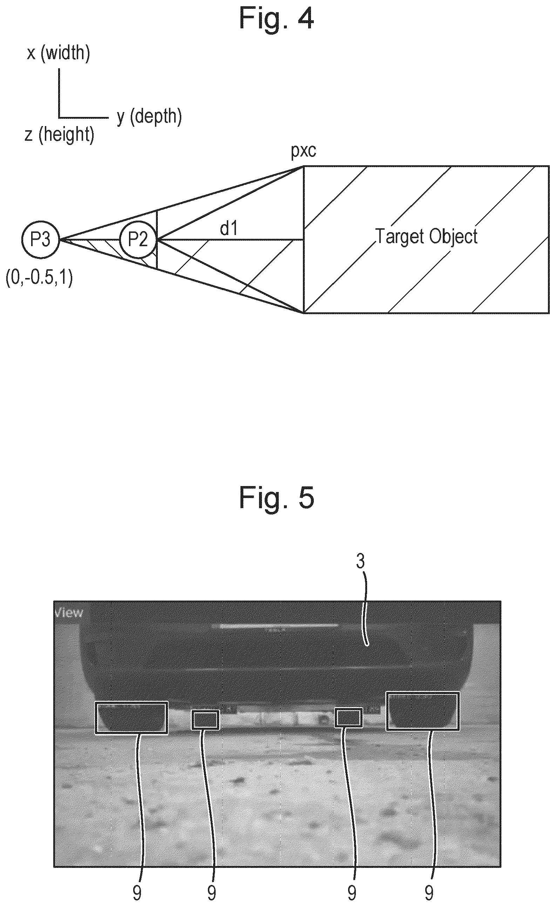

An example of this process is illustrated in Fig. 4, where the one or more sensors comprise a camera, and taking the first and second measurements comprises capturing respective first and second images of the vehicle 3.

The first measurement is taken with the UAV 5 at a first position. Optionally, the first position is an initial position of the UAV 5. An initial position here means a position at which the UAV 5 is placed on the ground by an operator at the beginning of the method, before the UAV 5 has been moved under the control of the processing unit 7. However, this is not essential and is not the case in the present example.

In the example of Fig. 4, the UAV 5 takes off from its initial position on the ground and moves to the first position (indicated by P2 in Fig. 4). In this case, the first position is hovering at a known height above the initial position, such as 0.8m. The known height may be any suitable height, but will typically be a height that is less than the height of the vehicle 3.

At the first position, the UAV 5 takes the first measurement. In this example, the UAV 5 takes a first image of the vehicle 3 and uses computer vision to identify two fixed points on the vehicle. The fixed points will typically be target features of the vehicle 3. In this example, the vehicle headlights are identified as the fixed points. However, a further reference is needed to convert the distance between the headlights in the first image into real distances.

To provide this reference, the second measurement is taken with the UAV 5 at a second position having a known displacement relative to the first position. The second position is indicated by P3 in Fig. 4. The known displacement may be obtained by any suitable method. In the example of Fig. 4, the UAV 5 further comprises an optical flow sensor. The downward-facing optical flow sensor provides the system with accurate data about the UAV's movements. The known displacement is determined by monitoring movement of the UAV 5 relative to the first position using the optical flow sensor during movement of the UAV 5 from the first position to the second position.

The optical flow sensor allows the UAV 5 to move backwards a known distance before repeating the same observations of the vehicle 3 as were taken at the first position, i.e. taking a second image of the vehicle 3. As shown in Fig. 4, the new perspective of the vehicle 3 afforded by the second image at the second position, and the known displacement between them, allows the system 1 to triangulate the absolute position relative to the UAV 5 of the fixed points that are visible in both the first image and the second image. In this example, the fixed points are used as anchor points 1 and 4 shown in Fig. 3.

The method may include one or more verification steps after each of the first and second measurements of the vehicle 3 are taken. The verification steps may involve confirming that the measurement will enable the processing unit 7 to derive the characteristic. For example, this may comprise verifying that the required target features of the vehicle 3 were detected in the corresponding measurement. If one of the measurements fails the verification step, the measurement may be repeated, and/or an alert may be provided to indicate that the measurements are not suitable to allow the characteristic to be derived.

Further characteristics may be determined based on the first and second measurements and/or further measurements taken using the one or more sensors of the UAV 5. For example, the width of the vehicle 3 can also be determined from the first and second images in the example above by detecting the edges of the vehicle 3 in both images and triangulating the distance between them in an equivalent manner as used for determining the positions of the fixed points.

In addition, Fig. 5 shows the UAV's initial view of the vehicle 3 from a camera of the UAV 5 at the initial position in the example above, before the UAV 5 takes off and moves to the first position. This may be used as a further measurement of the vehicle 3 to determine one or more further characteristics of the vehicle 3.

At the initial position, the UAV 5 has a view of the vehicle's tyres 9. Automated object detection and computer vision are used to identify the vehicle's tyres 9 in the image. By assuming that the distance between the two front tyres is the same as the distance between the two rear tyres, the processing unit 7 can derive the relationship between the width and length of the vehicle 3 from this image.

By combining this with the width of the vehicle 3 derived from the first and second measurements, the length of the vehicle can also be determined. This may allow the positions of further anchors to be determined, such as anchors 2 and 3 in Fig. 3.

The measurements may be taken in any order. For example, the view of the vehicle's tyres may be captured at the initial position before the UAV 5 takes off, and before the first and second measurements are taken.

Other implementations may be used to take the first and second measurements. For example, taking the first measurement comprises capturing a first image of the vehicle 3 using the camera similarly as described above. Taking the second measurement comprises determining a distance from the UAV 5 to the vehicle 3 using the ranging sensor. The distance from the UAV 5 to the vehicle 3 can be used for triangulating the distance between the fixed points or determining other characteristics based on the first image, without the need to move the UAV 5 between the taking of the two measurements.

The method further comprises calculating S12 a flight waypoint corresponding to each imaging action based on the detected characteristic and the imaging action.

The flight waypoint corresponding to each imaging action is calculated by transforming the one or more abstract waypoints for that imaging action from the abstract co-ordinate system of the imaging plan into a flight co-ordinate system based on the detected characteristic. The flight co-ordinate system is defined such that a distance between any two points in the flight co-ordinate system has a known correspondence to a physical distance in the space around the UAV 5. This contrasts with the abstract co-ordinate system of the predetermined imaging plan. In the abstract co-ordinate system, abstract waypoints may be defined in terms of physical distances from an anchor point. However, the distances between anchor points (and consequently between abstract waypoints defined relative to different anchor points) may not have a known correspondence to a physical distance because the physical distance between the anchor points in the abstract co-ordinate system is not derivable from the imaging plan.

The flight co-ordinate system may be defined relative to a reference position, such as the initial position of the UAV 5. The actual location of the reference position is not particularly critical as long as the physical displacement from the initial position of the UAV 5 to the reference position is known, such that the position of the UAV 5 in the flight co-ordinate system can be derived.

Transforming the abstract waypoints into the flight co-ordinate system based on the detected characteristic comprises determining positions of the one or more anchor points in the flight co-ordinate system based on the detected characteristic. This can be carried out as described above in relation to Fig. 3.

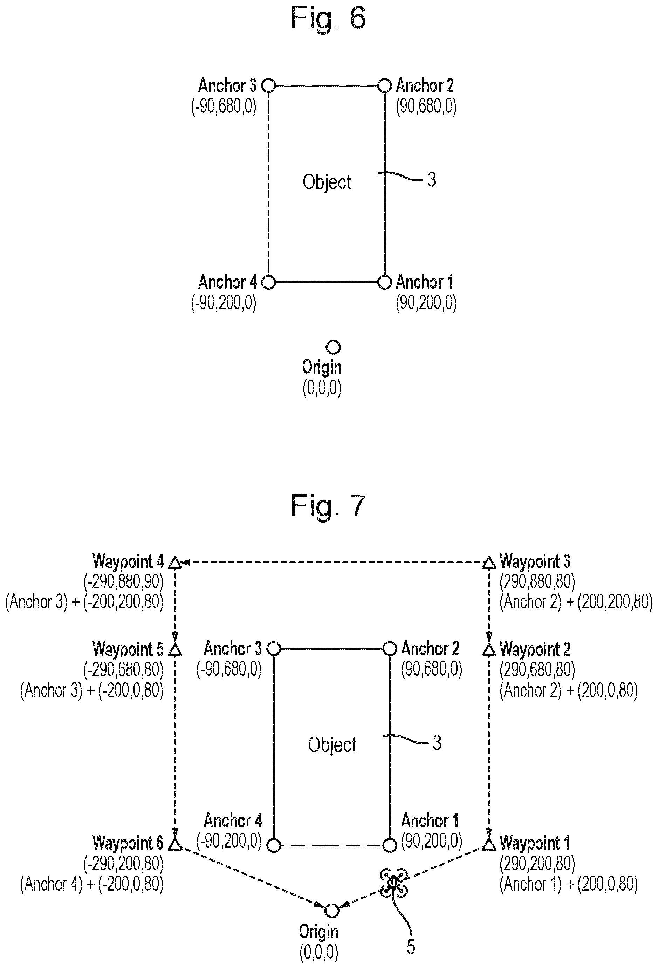

Fig. 6 and Fig. 7 show a first example of the localisation process provided by steps S10 and S12 of the method.

Based on the first and second measurements, the positions of the four anchor points in the flight co-ordinate system have been determined as shown in Fig. 6. We can see that a rectangular object has been detected. The flight co-ordinate system is defined with its origin at the position of the UAV 5, which is initially positioned centrally at the front of the vehicle 3. The processing unit 7 of the system 1 then calculates flight waypoints 1-6 in the flight co-ordinate system corresponding to the abstract waypoints 1-6 of the imaging plan shown in Fig. 3.

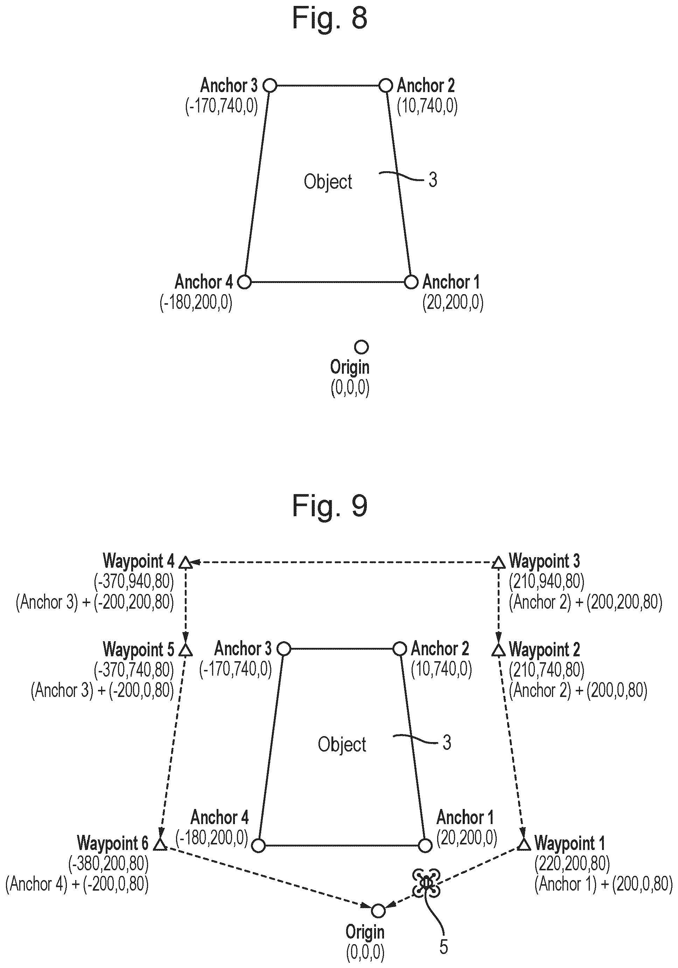

Fig. 8 and Fig. 9 show a second example of the localisation process, illustrating how the result of the process differs from a vehicle of a different size and shape to the vehicle in Fig. 6 and Fig. 7. The same imaging plan of Fig. 3 is implemented. However, the vehicle 3 is a different size and different shape, and the UAV 5 begins its flight in a different location relative to the vehicle 3. Therefore, the co-ordinates of the flight waypoints in Fig. 9 are significantly different to those in Fig. 7, even though they correspond to the same set of abstract waypoints.

The method may further comprise carrying out S14 the imaging actions. Where the characteristic of the vehicle that is detected in step S10 comprises a position of a target feature, this step comprises carrying out the imaging actions based on the detected positions of target features of the vehicle 3.

Once the flight waypoints have been determined, the system 1 is now ready to carry out the imaging of the vehicle 3 according to the specification of the predetermined imaging plan. The carrying out of the imaging actions may be achieved by controlling the UAV 5 to move between each of the calculated flight waypoints. The UAV 5 is controlled by the processing unit 7 in a far more precise manner than piloted UAVs. The control is more akin to a detailed robotic manipulation task.

The UAV 5 may further comprise an optical flow sensor, which can allow the UAV 5 to track its movement relative to its surroundings with high accuracy and precision. Controlling the UAV 5 to move between each of the calculated flight waypoints may then comprise monitoring movement of the UAV 5 between the flight waypoints using the optical flow sensor.

As mentioned above, the imaging actions comprise a combination of instructions for controlling movement of the UAV 5 and instructions for the capturing of images of the vehicle 3. Therefore, each imaging action may comprise, in addition to one or more abstract waypoints, one or more instructions for imaging the vehicle 3 that are to be carried out at the corresponding abstract waypoints and/or during movement between the corresponding abstract waypoints. Carrying out S14 the imaging actions will then comprise executing the instructions for imaging the vehicle 3 as the UAV 5 moves between each of the corresponding flight waypoints.

Controlling the UAV 5 to move between each of the calculated flight waypoints may comprise calculating a path between the flight waypoints. Because the abstract waypoints may not always have a spatial relationship to one another defined in terms of physical distance, it may be necessary to determine a path in the flight co-ordinate system between two or more of the flight waypoints after the flight waypoints have been calculated.

Any suitable path may be calculated, such as a straight line between the flight waypoints. The imaging actions may specify one or more properties of the movement of the UAV 5 along the path between the flight waypoints corresponding to the imaging action. For example, the imaging actions may specify a shape of the path (such as a curved path of a specified radius), a speed of movement of the UAV 5 along the path, an orientation of the UAV 5 and/or the camera of the UAV 5 relative to the vehicle 3 at any point along the path, a minimum or maximum distance of the UAV 5 from the vehicle 3 along the path. Such specifications allow for particular stylistic choices in the composition of the vehicle imaging, particularly where the UAV 5 is capturing video images.

However, it is not essential that the imaging actions specify any properties of the path or of the movement of the UAV 5 along the path. The processing unit 7 may calculate the path between the flight waypoints according to a default path specification when the corresponding imaging actions do not specify any properties of the movement of the UAV 5 along the path. The default path specification may specify any of the properties of the movement of the UAV 5 along the path given as examples above. The system 1 may ask for verification of a calculated path by a human operator, for example via the processing unit 7, before the processing unit 7 begins to control the UAV to carry out the imaging actions.

Controlling the UAV 5 to move between each of the calculated flight waypoints may further comprise detecting an obstruction along a path between the flight waypoints, and modifying the path between the flight waypoints to avoid the obstruction. The position of one or more of the flight waypoints may also be modified to avoid the obstruction.

This can allow the system 1 to compensate for variables that are not accounted for in the imaging plan. These may include environmental obstacles in the space around the vehicle 3 that need to be avoided, or unexpected properties of the vehicle 3 itself. For example, a vehicle 3 having a roof rack or other non-standard modifications may require the UAV 5 to move further away from the vehicle 3 in certain parts of the imaging process than specified by the imaging plan. The UAV 5 may use other proximity sensors to avoid local obstructions and move around them. The UAV 5 may alert a human operator in the case where avoidance of an obstacle is not possible.

Carrying out the imaging actions may comprise capturing images of the vehicle 3. The images may be captured by a camera of the UAV 5, which may be the same camera that is used for the detection of the characteristic of the vehicle.

Capturing images of the vehicle 3 may comprise one or both of recording video images of the vehicle 3, and capturing one or more still images of the vehicle 3. Recording video images of the vehicle 3 may be carried out during movement of the UAV between flight waypoints corresponding to the imaging action. Capturing one or more still images of the vehicle may be carried out while the UAV is stationery at a flight waypoint corresponding to the imaging action. The imaging actions may specify an orientation of the UAV 5 relative to the vehicle 3 during the capturing of the images of the vehicle 3.

Once all of the imaging actions have been carried out, the UAV 5 may return to and land at its initial position or return to the docking station 11.

The imaging plan may be divided into two or more sections that are carried out on the same vehicle 3, but where the state of the vehicle 3 differs for each section. For example, a first section may be carried out on the vehicle 3 with its doors or windows closed, and a second section may be carried out with the doors and windows of the vehicle 3 opened.

Each section may comprise one or more imaging actions that are carried out as described above. The UAV 5 may land or enter a waiting state once all of the imaging actions of a section have been completed. The system 1 may then indicate to a human operator that the section has been completed so that the state of the vehicle 3 can be changed appropriately.

Depending on the nature of the change in status of the vehicle, the anchor points of the two sections may differ. If the anchor points of a section differ from those of a preceding section, the step of detecting S10 the characteristic of the vehicle may be repeated before the flight waypoints are calculated for that section.

As mentioned above, the system 1 is configured to operate once deployed without needing continuous connection to remote servers, such as a cloud server. Remote or cloud connection may be required only when new imaging plans are to be downloaded or the videos and images captured by the UAV 5 are to be uploaded for use.

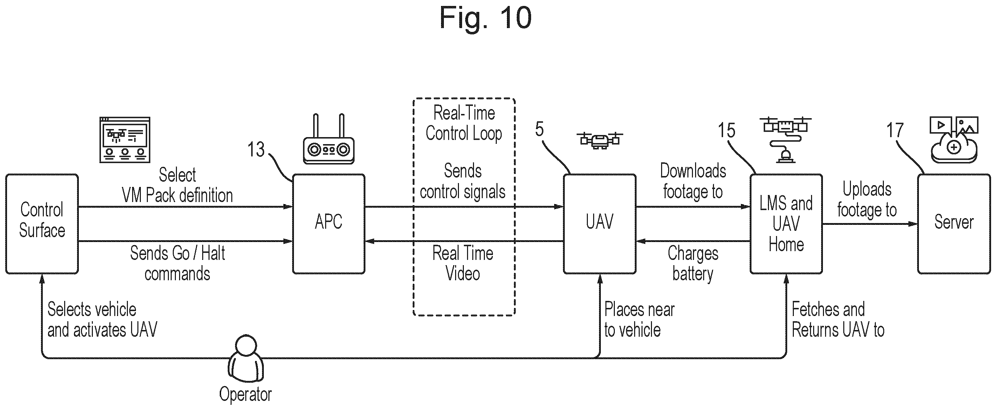

Fig. 10 shows the components of an example configuration of the software and hardware of the system 1 to enable this type of localised operation.

The Autonomous Pilot Control (APC) 13 is a software component running on the processing unit 7, which provides local control of the UAV 5. Thereby, the processing unit 7 may control the UAV 5 using the APC 13. The APC 13 includes all the software (such as A.I. components and algorithms) for detecting the vehicle characteristics, calculating the flight waypoints and the paths of the UAV 5 between flight waypoints to translate the abstract flight plan into instructions for controlling the UAV 5 that are appropriate for differing vehicles, conditions, and obstacles. The APC 13 receives input from the one or more sensors of the UAV 5, such as its camera.

The APC may also provide alerts for UAV 5 issues, for instance battery charging management, object alerting when the UAV 5 is unable to navigate around an object, faults with the UAV 5 etc. These alerts may be provided in visual, audible, and/or tactile form, for example via a display or speakers of the processing unit 7.

The Local Management Software (LMS) 15 is a further software component running on the processing unit 7 in the same physical device as the APC. The LMS 15 manages the upload and distribution of imaging plans to the local systems such as the APC. The LMS also manages the upload/download of imaging data, for example from the UAV 5 and/or to a remote server 17.

The remote server 17 may comprise various other software components used to process the imaging data for use in the various application described above. Such software may include video makers or other image processing software that can apply editing effects and/or process the imaging data from the UAV 5 into standardised formats to provide consistency and comparability with other imaging data acquired for other vehicles or the same vehicle at different times.

The separation of the collection of imaging data by the system 1 and the processing of imaging data via the remote server 17 allows for the separation of the associated tasks to different operators, such as employees in different locations or administrative divisions of a business. This allows the operators with appropriate skills and experience to carry out each part of the process of preparing vehicles for sale or monitoring their condition.

This may provide particular advantages for enterprises with many retail locations and centralised administrative functions. Imaging plans can be designed centrally and distributed to individual locations. The automated UAV 5 control by the system 1 ensures that imaging is carried out consistently and accurately according to the plan. The imaging data is then returned in a consistent format to a central location for processing and upload to appropriate marketing websites.

## Claims

1. A method of imaging a vehicle (3) using an unmanned aerial vehicle, UAV (5), according to a predetermined imaging plan, wherein:
the UAV (5) comprises one or more sensors; and
the predetermined imaging plan comprises one or more imaging actions,
the method comprising:
detecting (S10) a characteristic of the vehicle (3) using the one or more sensors;
and **characterised in that** the method further comprises:
calculating (S12) a flight waypoint corresponding to each imaging action based on the detected characteristic and the imaging action,
wherein the predetermined imaging plan is defined in an abstract co-ordinate system, such that the predetermined imaging plan is generic to one or more classes of vehicle (3).

2. The method of claim 1, wherein the one or more classes of vehicle (3) comprise vehicles (3) of differing sizes and shapes.

3. The method of claim 1 or 2, wherein each imaging action comprises an abstract waypoint defined in the abstract co-ordinate system, and the flight waypoint corresponding to each imaging action is calculated (S12) by transforming the abstract waypoint into a flight co-ordinate system based on the detected characteristic,
optionally wherein the flight co-ordinate system is defined relative to a reference position, optionally wherein the reference position is an initial position of the UAV (5).

4. The method of claim 3, wherein the abstract waypoint is defined relative to one or more anchor points, the anchor points corresponding to positions on the vehicle (3) and/or positions of target features of the vehicle (3),
optionally wherein transforming the abstract waypoint into the flight co-ordinate system based on the detected characteristic comprises determining positions of the one or more anchor points in the flight co-ordinate system based on the detected characteristic.

5. The method of any preceding claim, wherein detecting (S10) the characteristic of the vehicle (3) comprises:
taking a first measurement of the vehicle (3) using the one or more sensors;
taking a second measurement of the vehicle (3) using the one or more sensors; and
determining the characteristic based on the first measurement and the second measurement.

6. The method of claim 5, wherein one or both of:
a) the first measurement is taken with the UAV (5) at a first position, optionally wherein the first position is an initial position of the UAV (5); and the second measurement is taken with the UAV (5) at a second position having a known displacement relative to the first position, optionally wherein the UAV (5) further comprises an optical flow sensor, and the known displacement is determined by monitoring movement of the UAV (5) relative to the first position using the optical flow sensor during movement of the UAV (5) from the first position to the second position; and
b) the one or more sensors comprise a camera; and taking the first and second measurements comprises capturing respective first and second images of the vehicle (3).

7. The method of claim 5, wherein:
the one or more sensors comprise a camera and a ranging sensor;
taking the first measurement comprises capturing a first image of the vehicle (3) using the camera; and
taking the second measurement comprises determining a distance from the UAV (5) to the vehicle (3) using the ranging sensor.

8. The method of any preceding claim, wherein the characteristic comprises a position of a target feature of the vehicle (3), optionally wherein the one or more sensors comprise a camera and detecting the position of the target feature of the vehicle (3) comprises detecting the target feature in an image captured by the camera using automated object detection.

9. The method of any preceding claim, wherein the method further comprises carrying out (S14) the imaging actions by controlling the UAV (5) to move between each of the calculated flight waypoints, optionally wherein the UAV (5) further comprises an optical flow sensor, and controlling the UAV (5) to move between each of the calculated flight waypoints comprises monitoring movement of the UAV (5) between the flight waypoints using the optical flow sensor.

10. The method of claim 9, wherein carrying out (S14) the imaging actions comprises capturing images of the vehicle (3),
optionally wherein one or more of:
a) capturing images of the vehicle (3) comprises recording video images of the vehicle (3), optionally during movement of the UAV (5) between flight waypoints corresponding to the imaging action;
b) capturing images of the vehicle (3) comprises capturing one or more still images of the vehicle (3), optionally while the UAV (5) is stationery at a flight waypoint corresponding to the imaging action; and
c) the imaging actions specify an orientation of the UAV (5) relative to the vehicle (3) during the capturing of the images of the vehicle (3).

11. The method of claim 9 or 10, wherein controlling the UAV (5) to move between each of the calculated flight waypoints comprises one or both of:
i) calculating a path between the flight waypoints, optionally wherein the imaging actions specify one or both of: a) a shape of the path between the flight waypoints corresponding to the imaging action, optionally wherein the path is a curved path; and b) a speed of movement of the UAV (5) along the path between flight waypoints corresponding to the imaging action; and
ii) detecting an obstruction along a path between the flight waypoints; and modifying the path between the flight waypoints to avoid the obstruction.

12. The method of claim 4, 8, or any preceding claim dependent thereon, wherein the target feature comprises a component of the vehicle (3), optionally wherein the component comprises one or more of tyres (9), wheels, headlights, rear lights, wing mirrors, door handles, specific body panels, and windows.

13. The method of any preceding claim, wherein one or both of:
a) the characteristic comprises a dimension of the vehicle (3), for example a width and/or length of the vehicle (3); and
b) the one or more sensors comprise a camera, a radar sensor, an ultrasonic sensor, an infra-red time of flight sensor, or a lidar sensor.

14. A system (1) for imaging a vehicle (3) comprising:
an unmanned aerial vehicle (3), UAV (5), comprising one or more sensors; and
a processing unit (7) configured to carry out the method of any of the preceding claims using the UAV (5).

15. A computer program comprising, or a computer-readable medium having stored thereon, instructions to cause the system (1) of claim 14 to carry out the method of any of claims 1 to 13.

## Patentansprüche

1. Verfahren zur Bildaufnahme eines Fahrzeugs (3) unter Verwendung eines unbemannten Luftfahrzeugs (Unmanned Aerial Vehicle, UAV) (5) gemäß einem vorgegebenen Bildaufnahmeplan, wobei:
das UAV (5) einen oder mehrere Sensoren umfasst; und
der vorgegebene Bildaufnahmeplan eine oder mehrere Bildaufnahmeaktionen umfasst,
wobei das Verfahren umfasst:
Erfassen (S10) eines Merkmals des Fahrzeugs (3) unter Verwendung des einen oder der mehreren Sensoren; und **dadurch gekennzeichnet, dass** das Verfahren ferner umfasst:
Berechnen (S12) eines Flugwegpunkts, der jeder Bildaufnahmeaktion entspricht, basierend auf dem erfassten Merkmal und der Bildaufnahmeaktion,
wobei der vorgegebene Bildaufnahmeplan in einem abstrakten Koordinatensystem definiert ist, so dass der vorgegebene Bildaufnahmeplan für eine oder mehrere Fahrzeugklassen (3) generisch ist.

2. Verfahren nach Anspruch 1, wobei die eine oder mehrere Fahrzeugklassen (3) Fahrzeuge (3) unterschiedlicher Größe und Form umfassen.

3. Verfahren nach Anspruch 1 oder 2, wobei jede Bildaufnahmeaktion einen im abstrakten Koordinatensystem definierten abstrakten Wegpunkt umfasst, und der jeder Bildaufnahmeaktion entsprechende Flugwegpunkt berechnet wird (S12), indem der abstrakte Wegpunkt basierend auf dem erfassten Merkmal in ein Flugkoordinatensystem transformiert wird,
wobei das Flugkoordinatensystem optional relativ zu einer Referenzposition definiert ist, wobei die Referenzposition optional eine Ausgangsposition des UAV (5) ist.

4. Verfahren nach Anspruch 3, wobei der abstrakte Wegpunkt relativ zu einem oder mehreren Ankerpunkten definiert ist, wobei die Ankerpunkte Positionen am Fahrzeug (3) und/oder Positionen von Zielmerkmalen des Fahrzeugs (3) entsprechen,
wobei optional die Transformation des abstrakten Wegpunkts in das Flugkoordinatensystem basierend auf dem erfassten Merkmal die Bestimmung der Positionen des einen oder der mehreren Ankerpunkte im Flugkoordinatensystem basierend auf dem erfassten Merkmal umfasst.

5. Verfahren nach einem der vorhergehenden Ansprüche, wobei das Erfassen (S10) des Merkmals des Fahrzeugs (3) umfasst:
Durchführen einer ersten Messung des Fahrzeugs (3) unter Verwendung des einen oder der mehreren Sensoren;
Durchführen einer zweiten Messung des Fahrzeugs (3) unter Verwendung des einen oder der mehreren Sensoren; und
Bestimmen des Merkmals basierend auf der ersten Messung und der zweiten Messung.

6. Verfahren nach Anspruch 5, wobei eines oder beide der Folgenden zutreffen:
a) die erste Messung wird mit dem UAV (5) an einer ersten Position durchgeführt, wobei die erste Position optional eine Ausgangsposition des UAV (5) ist; und die zweite Messung wird mit dem UAV (5) an einer zweiten Position durchgeführt, die eine bekannte Verschiebung relativ zur ersten Position aufweist, wobei das UAV (5) optional ferner einen optischen Flusssensor umfasst, und die bekannte Verschiebung bestimmt wird durch Überwachen der Bewegung des UAV (5) relativ zur ersten Position unter Verwendung des optischen Flusssensors während der Bewegung des UAV (5) von der ersten Position zur zweiten Position; und
b) der eine oder die mehreren Sensoren eine Kamera umfassen; und das Durchführen der ersten und der zweiten Messung das Aufnehmen eines jeweiligen ersten und zweiten Bildes des Fahrzeugs (3) umfasst.

7. Verfahren nach Anspruch 5, wobei:
der eine oder die mehreren Sensoren eine Kamera und einen Entfernungssensor umfassen;
das Durchführen der ersten Messung das Aufnehmen eines ersten Bildes des Fahrzeugs (3) unter Verwendung der Kamera umfasst; und
das Durchführen der zweiten Messung das Bestimmen einer Entfernung vom UAV (5) zum Fahrzeug (3) unter Verwendung des Entfernungssensors umfasst.

8. Verfahren nach einem der vorhergehenden Ansprüche, wobei das Merkmal eine Position eines Zielmerkmals des Fahrzeugs (3) umfasst, optional wobei der eine oder die mehreren Sensoren eine Kamera umfassen und das Erfassen der Position des Zielmerkmals des Fahrzeugs (3) das Erkennen des Zielmerkmals in einem von der Kamera aufgenommenen Bild unter Verwendung einer automatisierten Objekterfassung umfasst.

9. Verfahren nach einem der vorhergehenden Ansprüche, wobei das Verfahren ferner das Ausführen (S14) der Bildaufnahmeaktionen umfasst, indem das UAV (5) so gesteuert wird, dass es sich zwischen jedem der berechneten Flugwegpunkte bewegt, wobei das UAV (5) optional ferner einen optischen Flusssensor umfasst, und das Steuern des UAV (5), damit es sich zwischen jedem der berechneten Flugwegpunkte bewegt, das Überwachen der Bewegung des UAV (5) zwischen den Flugwegpunkten unter Verwendung des optischen Flusssensors umfasst.

10. Verfahren nach Anspruch 9, wobei das Durchführen (S14) der Bildaufnahmeaktionen das Aufnehmen von Bildern des Fahrzeugs (3) umfasst,
wobei optional eines oder mehrere der Folgenden gilt:
a) das Aufnehmen von Bildern des Fahrzeugs (3) umfasst das Aufzeichnen von Videobildern des Fahrzeugs (3), optional während der Bewegung des UAV (5) zwischen Flugwegpunkten, die dem jeweiligen Bildaufnahmeaktion entsprechen;
b) das Aufnehmen von Bildern des Fahrzeugs (3) umfasst das Aufnehmen eines oder mehrerer Standbilder des Fahrzeugs (3) optional während das UAV (5) an einem der Bildaufnahmeaktion entsprechenden Flugwegpunkt stillsteht; und
c) die Bildaufnahmeaktionen legt eine Ausrichtung des UAV (5) relativ zum Fahrzeug (3) während der Aufnahme der Bilder des Fahrzeugs (3) fest.

11. Verfahren nach Anspruch 9 oder 10, wobei das Steuern des UAV (5) zur Bewegung zwischen jedem der berechneten Flugwegpunkte eines oder beide der Folgenden umfasst:
i) Berechnen eines Pfads zwischen den Flugwegpunkten, optional wobei die Bildaufnahmeaktionen eines oder beide der Folgenden festlegen: a) eine Form des Pfads zwischen den Flugwegpunkten, die der Bildaufnahmeaktion entspricht, optional wobei der Pfad eine gekrümmte Flugbahn ist; und b) eine Bewegungsgeschwindigkeit des UAV (5) entlang des Pfads zwischen den Flugwegpunkten, die der Bildaufnahmeaktion entspricht; und
ii) Erfassen eines Hindernisses entlang eines Pfads zwischen den Flugwegpunkten; und Modifizieren des Pfads zwischen den Flugwegpunkten, um das Hindernis zu vermeiden.

12. Verfahren nach Anspruch 4, 8 oder einem vorhergehenden Anspruch, wobei das Zielmerkmal eine Komponente des Fahrzeugs (3) umfasst, optional wobei die Komponente eines oder mehrere der Folgenden umfasst: Reifen (9), Räder, Scheinwerfer, Rückleuchten, Außenspiegel, Türgriffe, bestimmte Karosserieteile und Fenster.

13. Verfahren nach einem der vorhergehenden Ansprüche, wobei eines oder beide der Folgenden zutreffen:
a) das Merkmal umfasst eine Abmessung des Fahrzeugs (3), beispielsweise eine Breite und/oder Länge des Fahrzeugs (3); und
b) der eine oder die mehreren Sensoren umfassen eine Kamera, einen Radarsensor, einen Ultraschallsensor, einen Infrarot-Laufzeitsensor oder einen Lidar-Sensor.

14. System (1) zur Bildaufnahme eines Fahrzeugs (3), das umfasst:
ein unbemanntes Luftfahrzeug, UAV (5), das einen oder mehrere Sensoren umfasst; und
eine Verarbeitungseinheit (7), die so konfiguriert ist, dass sie das Verfahren nach einem der vorhergehenden Ansprüche unter Verwendung des UAV (5) ausführt.

15. Computerprogramm, das Anweisungen umfasst, oder ein computerlesbares Medium, auf dem Anweisungen gespeichert sind, um das System (1) nach Anspruch 14 zur Durchführung des Verfahrens nach einem der Ansprüche 1 bis 13 zu veranlassen.

## Revendications

1. Procédé de prise de vues d'un véhicule (3) au moyen d'un drone aérien (5), suivant un plan de prise de vues prédéterminé, dans lequel :
le drone (5) comprend un ou plusieurs capteurs, et
le plan de prise de vues prédéterminé comprend une ou plusieurs actions de prise de vues ;
le procédé comprenant :
la détection (S10) d'une caractéristique du véhicule (3) au moyen du ou des capteurs ;
le procédé étant **caractérisé en ce qu'**il comprend en outre :
le calcul (S12) d'un point de passage de vol correspondant à chaque action de prise de vues en fonction de la caractéristique détectée et de l'action de prise de vues ;
le plan de prise de vues prédéterminé étant défini dans un système de coordonnées abstrait, de façon que ledit plan de prise de vues prédéterminé est générique pour une ou plusieurs classes de véhicules (3).

2. Procédé selon la revendication 1, dans lequel la ou les classes de véhicules (3) comprennent des véhicules (3) de tailles et de formes différentes.

3. Procédé selon la revendication 1 ou 2, dans lequel chaque action de prise de vues comprend un point de passage abstrait défini dans le système de coordonnées abstrait, et le point de passage de vol correspondant à chaque action de prise de vues est calculé (S12) par transformation du point de passage abstrait en système de coordonnées de vol en fonction de la caractéristique détectée,
le système de coordonnées de vol étant éventuellement défini par rapport à une position de référence, la position de référence étant éventuellement la position initiale du drone (5).

4. Procédé selon la revendication 3, dans lequel le point de passage abstrait est défini par rapport à un ou plusieurs points d'ancrage, les points d'ancrage correspondant à des positions présentes sur le véhicule (3) et/ou à des positions d'éléments cibles du véhicule (3),
la transformation du point de passage abstrait en système de coordonnées de vol en fonction de la caractéristique détectée comprenant éventuellement la détermination de la position du ou des points d'ancrage dans le système de coordonnées de vol en fonction de la caractéristique détectée.

5. Procédé selon l'une quelconque des revendications précédentes, dans lequel la détection (S10) de la caractéristique du véhicule (3) comprend :
la réalisation d'une première mesure du véhicule (3) au moyen du ou des capteurs,
la réalisation d'une deuxième mesure du véhicule (3) au moyen du ou des capteurs, et
la détermination de la caractéristique en fonction de la première mesure et de la deuxième mesure.

6. Procédé selon la revendication 5, dans lequel :
a) la première mesure est réalisée tandis que le drone (5) est à une première position, la première position étant éventuellement une position initiale du drone (5) ; et la deuxième mesure est réalisée tandis que le drone (5) est à une deuxième position présentant un décalage connu par rapport à la première position, le drone (5) comprenant éventuellement en outre un capteur de flux optique, et le décalage connu étant déterminé par surveillance du déplacement du drone (5) par rapport à la première position au moyen du capteur de flux optique pendant le déplacement du drone (5) de la première position vers la deuxième position, et
b) le ou les capteurs comprennent une caméra ; et la réalisation des première et deuxième mesures comprend la capture de première et deuxième images respectives du véhicule (3).

7. Procédé selon la revendication 5, dans lequel :
le ou les capteurs comprennent une caméra et un capteur de télémétrie,
la réalisation de la première mesure comprend la capture d'une première image du véhicule (3) au moyen de la caméra, et
la réalisation de la deuxième mesure comprend la détermination d'une distance du drone (5) au véhicule (3) au moyen du capteur de télémétrie.

8. Procédé selon l'une quelconque des revendications précédentes, dans lequel la caractéristique comprend la position d'un élément cible du véhicule (3), le ou les capteurs comprenant éventuellement une caméra, et la détection de la position de l'élément cible du véhicule (3) comprenant la détection de l'élément cible dans une image capturée par la caméra au moyen d'une détection automatisée d'objets.

9. Procédé selon l'une quelconque des revendications précédentes, comprenant en outre la mise en œuvre (S14) des actions de prise de vues par commande du déplacement du drone (5) entre tous les points de passage de vol calculés, le drone (5) comprenant éventuellement en outre un capteur de flux optique, et la commande du déplacement du drone (5) entre tous les points de passage de vol calculés comprend la surveillance du déplacement du drone (5) entre les points de passage de vol au moyen du capteur de flux optique.

10. Procédé selon la revendication 9, dans lequel la mise en œuvre (S14) des opérations de prise de vues comprend la capture d'images du véhicule (3),
dans lequel éventuellement :
a) la capture d'images du véhicule (3) comprend l'enregistrement d'images vidéo du véhicule (3), éventuellement pendant le déplacement du drone (5) entre des points de passage de vol correspondant à l'action de prise de vues,
b) la capture d'images du véhicule (3) comprend la capture d'une ou plusieurs images fixes du véhicule (3), éventuellement pendant que le drone (5) est immobile à un point de passage de vol correspondant à l'action de prise de vues, et/ou
c) les actions de prise de vues spécifient une orientation du drone (5) par rapport au véhicule (3) pendant la capture des images du véhicule (3).

11. Procédé selon la revendication 9 ou 10, dans lequel la commande du déplacement du drone (5) entre tous les points de passage de vol calculés comprend :
i) le calcul d'une trajectoire entre les points de passage de vol, les actions de prise de vues spécifiant éventuellement : a) la forme de la trajectoire entre les points de passage de vol correspondant à l'action de prise de vues, la trajectoire étant éventuellement une trajectoire courbe, et/ou b) la vitesse de déplacement du drone (5) le long de la trajectoire entre des points de passage de vol correspondant à l'action de prise de vues, et/ou
ii) la détection d'un obstacle sur une trajectoire entre les points de passage de vol, et la modification de la trajectoire entre les points de passage de vol afin d'éviter l'obstacle.

12. Procédé selon la revendication 4, 8 ou toute revendication précédente qui en dépend, dans lequel l'élément cible comprend un composant du véhicule (3), le composant comprenant un ou plusieurs des suivants : les pneus (9), les roues, les phares, les feux arrière, les rétroviseurs extérieurs, les poignées de porte, des panneaux de carrosserie spécifiques et les vitres.

13. Procédé selon l'une quelconque des revendications précédentes, dans lequel :
a) la caractéristique comprend une dimension du véhicule (3), par exemple la largeur et/ou la longueur du véhicule (3), et/ou
b) le ou les capteurs comprennent une caméra, un capteur radar, un capteur à ultrasons, un capteur infrarouge à temps de vol ou un capteur lidar.

14. Système (1) de prise de vues d'un véhicule (3), comprenant :
un drone aérien (5) comprenant un ou plusieurs capteurs, et
une unité de traitement (7) conçue pour mettre en œuvre le procédé selon l'une quelconque des revendications précédentes au moyen du drone (5).

15. Programme informatique comprenant, ou support lisible par ordinateur sur lequel sont stockées, des instructions permettant d'amener le système (1) selon la revendication 14 à mettre en œuvre le procédé selon l'une quelconque des revendications 1 à 13.
